# EUROPEAN PATENT APPLICATION

(11) **EP 1 734 014 A1**
(43) Date of publication of application: **20.12.2006**
(21) Application number: 05105193.6
(22) Date of filing: 14.06.2005
(51) Int. Cl.: C02F 11/12, C02F 11/02, C02F 3/30, C02F 3/20

(54) **Device and method for filtration of fluids**

(71) Applicant: PDL Development SL, 29640 Fuengirola, Malaga (ES)
(72) Inventor:
(74) Representative: Milanov, Nina Vendela Maria

(57) **Abstract**

According to one aspect, a fluid treatment device comprises a sludge separator (1). The separator (1) comprises an inner funnel (6) and an outer (7) funnel, arranged with an intermediate, at least partial, gap (8) between the funnels (6, 7). According to another aspect, a fluid filtering device comprises a filter portion (2) containing a filtering material (18), a fluid inlet (4) and a fluid outlet (24). The inlet (4) is in the upper part of the device and the outlet (24) is in the lower part of the device. Aeration nozzles (19) are arranged in the device between the inlet (4) and the outlet (24) at a distance from the inlet (4) and the outlet (24), respectively, enabling the creation of a vertical division of the filter portion (2) into an aerobe section (2a) and an anaerobe section (2b).A method for filtering a fluid is also disclosed, as well as a method for regenerating a filtering device.

## Description

### Technical Field of the Invention

The present invention relates to a fluid treatment device comprising a sludge separator. The invention also relates to a fluid-filtering device comprising a filter portion containing a filtering material, a fluid inlet and a fluid outlet, wherein the inlet is in the upper part of the device and the outlet is in the lower part of the device. The invention is also directed to a treatment system comprising two or more treatment devices coupled in parallel or in series and a filtering system comprising two or more filtering devices coupled in parallel or in series. The invention further relates to a filtering method.

### Background Art

The interest for individually sized filtering systems for filtering of water is ever increasing. The need ranges from filtering waste water from individual households to filtering fabrication water from large process industries.

In many cases the removal of organic waste is the key issue and devices using biofilters for this purpose are known in the art. Prior-art devices generally comprise a container filled with filter material, such as sand, wood chips, peat, plastic or the like, wherein the water enters the container from above and is filtered and cleansed from organic impurities while it passes the filter material. The filter material can be pre-treated with a suitable bacterial culture, and if not, a bacterial culture will eventually be built up on the filter material by the waste water itself. The bacteria decompose the organic material into e.g. nitrogen gas, and other impurities are removed by adsorption or absorption to the carrier material. The devices and methods known in the art suffer from several drawbacks, e.g. the filtering device is clogged by sludge and needs to be back-washed. This obviously affects the efficiency and the capacity of the filtering device negatively. If performed, the pre-removal of sludge generally occurs in a sedimentation tank prior to the actual filtering device. For the sedimentation tank to work properly the water flow needs to be slow, which means that if the filtering device should have a large capacity it will need a voluminous sedimentation tank.

### Summary of the Invention

The purpose of the present invention is to provide a solution to the above mentioned problems. This purpose is according to a first aspect of the invention solved by a fluid treatment device having a sludge separator, which comprises a concentrically arranged inner and outer funnel with an intermediate, at least partial, gap there between. The arrangement enables the separator to operate in a two-step process which makes it highly efficient.

The fluid treatment device may also comprise a filtering device having a filter portion containing a filtering material, a fluid inlet and a fluid outlet, wherein the inlet is in the upper part of the device and the outlet is in the lower part of the device.

The sludge separator enhances the efficiency of the filtering device since it reduces clogging of the filtering material. It also reduces the area needed for the filtering device since the need of a large sedimentation tank is greatly reduced. Since the flow through the filtering device is from top to bottom the back-washing, or regeneration, of the filtering device is more efficient.

The separator can also comprise a circulation pump by which an essentially circular horizontal swirling fluid flow can be provided in the inner funnel. The pump is arranged to collect fluid from the separator and eject it essentially tangential to the circumference of the inner funnel. The provision of a swirl forces sludge particles radially outwards towards the wall of the inner funnel and when they reach the upper rim of the inner funnel they will fall into the gap between the inner and the outer funnel and will consecutively be collected. The remaining fluid, from which sludge has been partially removed, will continue through the device. The water is preferably drawn from a location near the exit of the sludge separator, thus using as clean water as possible.

According to one embodiment of the invention a cylinder provided with flanges extending outwardly from the circumference of the cylinder is concentrically arranged in the inner funnel. Fluid entering the device will be injected into the cylinder and because of the constricting walls it will follow the flow downwards. Between the lower rim of the cylinder and the lower part of the inner cylinder there is a gap. Dense sludge particles will continue downwards to a sludge collection system, forced by gravity, while less dense particles will travel upwards along the wall of the inner cylinder, forced by the water flow. The flange will also force the sludge containing water to travel along the wall of the inner funnel, which also enhances the sludge separation process.

The inventive device is preferably sealed so that it can operate under a superatmospheric pressure. This makes the sludge separator work without the risk of backflow in the upper part of the device. The pressure is preferably just enough to force the flow through the device in general and the sludge separator in particular.

The treatment device can also comprise a drain for drainage of particle material and/or sludge. The drain is preferably coupled to the lower part of the sludge separator so that sludge separated by the process described will be concentrated to the drain. By opening a valve in the bottom of the drain the sludge can efficiently be removed from the device. When the system is regenerated the fluid will enter the separator and leave the device through the drain.

The filtering device can also comprise aeration nozzles, arranged between the inlet and the outlet at a distance from the inlet and the outlet, respectively. This opens up for the possibility of parting the device into an aerobe section and an anaerobe section and leads to the advantage that different types of bacteria can be used, degrading different type of pollutants, in the same vessel, especially nitrifying and denitrifying bacteria. This makes the device more efficient than prior art devices where the processes occur in separate tanks or during separate time periods or where the adaptation of parameters such as oxygen content to the needs of different bacteria is difficult. Further, the flow of air bubbles from below will force sludge particles upwards in the device and it will consequently reduce the need of regeneration of the filtering material as compared to prior art.

A fluid treatment system comprising two or more treatment devices according to the invention, coupled in parallel and/or in series, can also be provided. This can be beneficial if the fluid needs to be treated in more than one step in order to be sufficiently purified. It is also an alternative to increasing the size of an existing filtering device and thus it provides for a flexible modular system.

According to another aspect of the invention the previously mentioned problems in prior art are solved by a fluid filtering device comprising filtering material, a fluid inlet passage and a fluid outlet passage wherein the inlet passage is in the upper part of the device and the outlet passage is in the lower part of the device characterised in that aeration nozzles are arranged in the device between the inlet and the outlet at a distance from the inlet and the outlet, respectively, enabling the creation of a vertical division of the filter portion into an aerobe section and an anaerobe section.

The possibility of parting the device into an aerobe section and an anaerobe section leads to the advantage that different types of bacteria can be used, degrading different types of pollutants, especially nitrifying ad denitrifying bacteria. This makes the device more efficient than prior art devices where the processes occur in separate tanks or during separate time periods, or where the adaptation of parameters such as oxygen content to the needs of different bacteria is difficult. Since the flow through the device is from top to bottom the back-washing, or regeneration, of the filtering device also is more efficient. Further the flow of gas bubbles from below will force small sludge particles upwards in the device and it will consequently reduce the need of regeneration of the filtering material as compared to prior art.

According to one embodiment of the invention the filtering device comprises a sludge separator. The sludge separator enhances the efficiency of the device since it reduces clogging of the filtering material. It also reduces the area needed for the device since the need of a large sedimentation tank is greatly reduced.

The separator can comprise concentrically arranged inner and an outer funnels with an intermediate, at least partial, gap there between. The arrangement enables the separator to operate in a two-step process which makes it highly efficient.

The separator can also comprise a circulation pump by which an essentially circular horizontal swirling fluid flow can be provided in the inner funnel. The pump is arranged to collect fluid from the separator and eject it essentially tangential to the circumference of the inner funnel. The provision of a swirl forces sludge particles radially outwards towards the wall of the inner funnel and when they reach the upper rim of the inner funnel they will fall into the gap between the inner and the outer funnel and will consecutively be collected. The remaining fluid, from which sludge has been partially removed, will continue through the device.

According to one embodiment a cylinder provided with flanges extending outwardly from the circumference of the cylinder is concentrically arranged in the inner funnel. Fluid entering the device will be injected into the cylinder and because of the constricting walls it will follow the flow downwards. Between the lower rim of the cylinder and the lower part of the inner cylinder there is a gap. Dense sludge particles will continue downwards to a sludge collection system, forced by gravity, while less dense particles will travel upwards along the wall of the inner cylinder, forced by the water flow. The flange will also force the sludge containing water to travel along the wall of the inner funnel, which also enhances the sludge separation process.

The inventive filtering device is preferably sealed, so that it can operate under a superatmospheric pressure. This makes the sludge separator work more efficiently without the risk of backflow in the upper part of the device, since the water thus can flow out of the sludge separator into the downstream elements of the device.

The filtering device can also comprise a drain for drainage of particle material and/or sludge. The drain is preferably coupled to the lower part of the sludge separator, so that sludge separated by the process described will be concentrated to the drain. By opening a valve in the bottom of the drain the sludge can efficiently be removed from the device. When the system is regenerated the fluid will enter the separator and leave the device through the drain.

A filtering system comprising two or more filtering devices according to the invention, coupled in parallel and/or in series, can also be provided. This can be beneficial if the fluid needs to be treated in more than one step in order to be sufficiently purified, for instance if large flows are to be treated. It is also an alternative to increasing the size of an existing filtering device and thus it provides for a flexible modular system.

According to one aspect of the invention, a method for filtering fluids in a filtering device, comprises the steps of:
- providing fluid to be filtered to a sludge separator of the filtering device,
- allowing larger particles to settle in the sludge separator and draining said larger particles out of the filtering device,
- creating an essentially circular swirling flow in the sludge separator, thus forcing smaller particles outwardly in a radial direction,
- collecting said smaller particles and draining them out of the filtering device,
- passing the fluid through a filter portion of the filtering device, and
- draining the filtered fluid out of the filtering device. This is an efficient way of treating polluted water, since the removal of sludge improves the efficiency of the treatment provided through filtering.

The fluid is preferably aerated in an upper portion of the filter portion and subjected to anaerobe conditions in a lower portion of the filter portion. In this manner different bacteria may effect removal of pollutants in different parts of the filter portion.

According to another aspect of the invention a method for filtering fluids in a filtering device, comprises the steps of:
- passing the fluid through a filter portion of the filtering device,
- aerating the fluid in an upper portion of the filter portion,
- subjecting the fluid to anaerobe conditions in a lower portion of the filter portion, and
- draining the filtered fluid out of the filtering device.

The provision of aerobic and anaerobic conditions in different parts of the filter portion makes it possible to utilize different bacteria in different parts of the filter, e.g. nitrifyers in the upper portion and denitrifyers in the lower portion.

The inventive method can also comprise the step of, prior to passing the fluid through the filter portion:
- providing fluid to be filtered to a sludge separator of the filtering device,
- allowing larger particles to settle in the sludge separator and draining said larger particles out of the filtering device,
- creating an essentially circular swirling flow in the sludge separator, thus forcing smaller particles outwardly in a radial direction,
- collecting said smaller particles and draining them out of the filtering device

The invention also relates to a method for regenerating a fluid filtering device of the previously mentioned type, comprising the steps of:
- stopping the supply of fluid to be filtered to the device and draining filtered fluid from the device,
- opening a drainage valve in a drainage pipe in the device providing a drainage of sludge,
- pumping regenerating fluid from a supply line in the bottom of the device, thus creating a flow upwards through the device, said fluid entering the sludge separator and consecutively said drainage pipe,
- releasing air from air nozzles provided in the lower part of the device, thus forcing sludge particles upwards in the device, said particles following the water flow out of the device.

The flow of air upwards through the device, in combination with the directed water flow will efficiently force sludge particles from the carrier material upwards.

The regeneration method is preferably performed with water. This is convenient since water is readily available. Water that has been cleaned by the device in a previous process could be used.

In some situations it is preferred that the regeneration method is performed with a fluid that comprises a saline solution. The saline solution makes it possible to release metal substances collected on the filter material, by an ion-exchanging process, and thus collect heavy metals and such.

### Brief Description of the Drawings

Having described the general nature of the invention, reference will now be made to the accompanying drawings, showing by way of example preferred embodiments of the invention.

Fig 1 is a schematic overview of a device according to one aspect of the invention in section.

Fig 2 is a plan view of the device shown in fig 1, showing the layout of the sludge separator in greater detail.

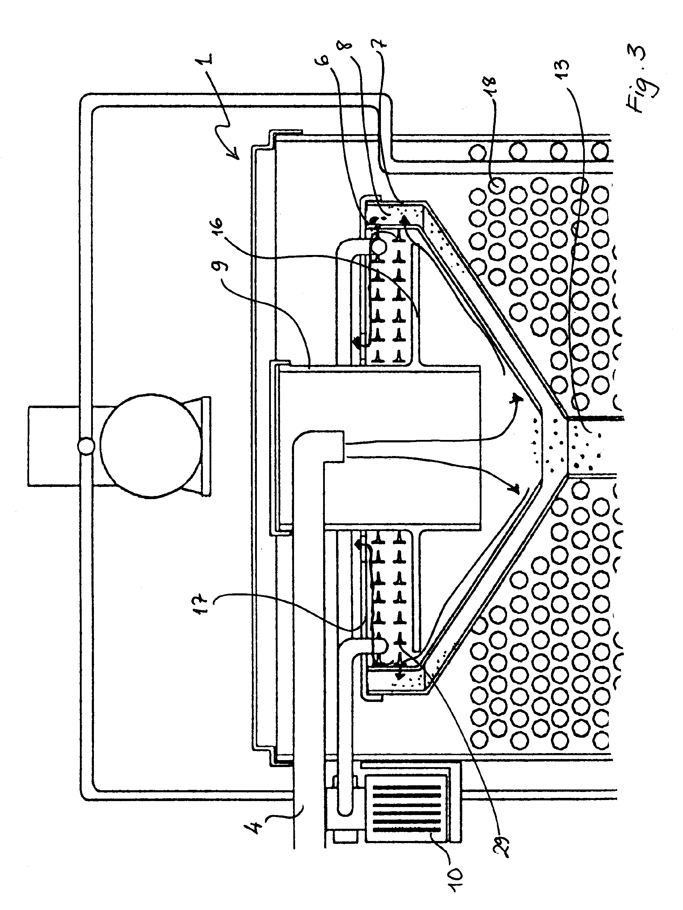

Fig 3 is an expanded view of the upper part of the device shown in fig 1. The arrows indicate the water flow through the sludge separator and the dots indicate the sludge concentration.

### Detailed description of preferred embodiments

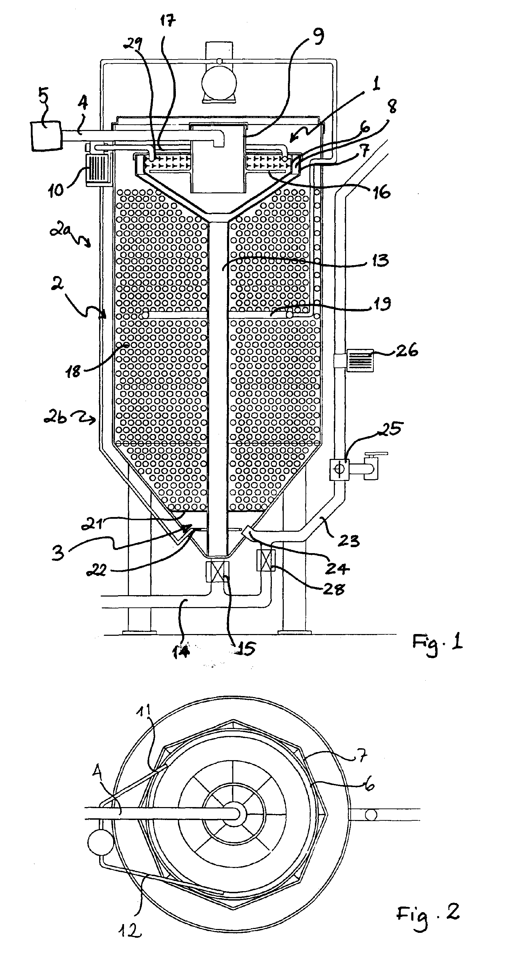

Fig. 1 shows a filtering device according to the invention, which comprises three main sections contained in the body of the device:
- a sludge separator 1,
- a filtering portion 2, and
- a discharge portion 3.

A fluid inlet 4 coupled to a feeding pump 5 renders possible for contaminated water to be forced into the device. The device operates under superatmospheric conditions, that is the device is enclosed but for the valve or pump controlled inlet and outlets. The fluid inlet 4 is arranged to direct the water into the sludge separator 1 comprising an inner funnel 6 concentrically arranged in an outer funnel 7, with a small gap 8 there between. The upper portion of the inner funnel 6 is provided with holes 29, establishing a fluid passageway into the outer funnel 7. A cylinder 9 is concentrically arranged in the inner funnel 6. The cylinder 9 is provided with a lid and the fluid inlet 4 ejects the water in an upper part of the cylinder 9. The cylinder 9 extends downwardly, below the upper rim of the inner funnel 6, leaving but a small gap between the lower edge of the cylinder 9 and the wall of the inner funnel 6. In connection with the sludge separator 1 a circulation pump 10 is arranged with an inlet piping 11 with which water can be drawn from the inner funnel 6, close to the cylinder 9, where the water is cleanest, and an outlet piping 12 that can direct a stream of water essentially tangential along the circumference of the inner funnel 6. This enables for a swirling flow to establish along the circumference of the inner funnel 6. The lowermost parts of the two funnels 6, 7 coincide into a coupling to a drainage pipe 13 extending from the lower part of the outer funnel 7, downwards through the filtering portion 2 and the discharge portion 3 into a sewer 14. In the lower part of the drainage pipe 13 a controllable discharge valve 15 is arranged.

During operation the sludge separator 1, along with the drainage pipe 13, will be filled with water and a swirling flow in the horizontal direction will be established in the inner funnel 6. The water entering the cylinder 9 will be forced downwards by the restricting walls of the cylinder 9 and the flow of the water, and large or dense sludge particles will immediately sink to the bottom of the funnel 6 and into the drainage pipe 13. Smaller or less dense particles will be forced upwardly along the walls of the inner cylinder 6, due to the water flow and the centrifugal forces. The cylinder 9 is provided with a circumferential flange 16, which also forces the water outwardly. The particles will eventually reach the upper portion of the inner funnel 6 where they will be forced radially outwards and be forced through T-shaped holes 29 arranged in the upper portion of the inner funnel 6 and fall into the gap 8 between the inner funnel 6 and the outer funnel 7. They will then drop along the inner wall of the outer funnel 7 into the drainage pipe 13. The funnel arrangement is provided with a cap 17 having openings around the outer circumference of the cylinder 9. This means that the water needs to flow radially inwards, opposite to the direction of the centrifugal forces, before it can flow over the rim of the outer funnel 7. This arrangement further decreases the amount of particles following the waterflow over the upper rim of the outer funnel 7, into the filtering portion 2.

The filtering portion 2 is essentially filled with a filtering material 18 acting also as carrier material for the bacteria and organisms. The filtering material can according to one inventive concept be zeolite particles. One advantage with this carrier material is that it has a large active surface area available for biological cleaning. One further advantage is that it is an ion exchanging material, whereby metals are bonded to it. In a regeneration process the carrier material then can be flushed with a saline solution which will remove the metals from the carrier material and regenerate the device.

In the approximate vertical centre of the filtering portion air nozzles 19 are arranged, which permit for pressurised air to be injected upwards into the device via a compressor pump (not shown). This provides for an aerobe environment in the upper half 2a of the filtering portion and an anaerobe environment in the lower half 2b. The air can obviously be exchanged for another gas if suitable for a specific process. Depending on the composition of the pollutants of the water to be treated, the position of the air nozzles 19 may be shifted slightly upwards or downwards, thus creating a smaller or larger aerobe portion.

A grid 21 is arranged in the bottom of the filtering portion 2, allowing water to pass while the filtering material 18 is prevented from penetrating the grid 21.

As the water passes the grid 21 it enters the discharge portion 3 of the device. Here another set of air nozzles 22 are arranged and also a feeding pipe 23 starting from the outlet 24 of the device and leading the processed water to a consecutive filtering device or simply out of the device. The feeding pipe 23 comprises a three-way valve 25 which in a first position directs water from the device to a consecutive device or similar. In a second position it allows for fresh water to be injected into the device, while the passage into a consecutive device is blocked. This feature is used when the device is back-washed or regenerated. The pipe 23 also comprises a feeding pump 26. This pump 26 facilitates the pumping of water into a potential consecutive filtering device.

During a regeneration procedure the inflow of water into the device and the flow of air from the first set of nozzles 19 are stopped and discharge valve 15 in the drainage pipe 13 is opened, allowing for the particles or sludge to drain. The tree-way valve 25 is set into its second position and water is pumped into the device from below while the air flow is directed through the nozzles 22 in the discharge portion 3 of the device. The combined water and air flow will transport the sludge to the upper part of the device and make it flow into the separator 1 and out through the drainage pipe 13. The water can either flow backwards through the openings arranged in the cap, around the outer circumference of the cylinder, or the cap can be lifted by means of floats or other arrangement, thus providing a more efficient regenerating flow.

The feeding pipe further comprises a controllable drain valve 28 which suitably leads to the same sewer as the discharge valve 15. When the whole system is to be emptied this valve opens, emptying the system completely of water and sludge, e.g. prior to a replacement of filtering material.

If only sludge from the drainage pipe 13 is to be removed, the normal filtering process can be left running while the discharge valve 15 in the drainage pipe 13 is opened for a suitable period of time.

In this preferred embodiment the inner funnel 6 has a circular horizontal cross section while the cross section of the outer funnel 7 is octagonal. The inner funnel is arranged in the outer funnel with the circumference near each of the eight facets. This construction leaves appropriate gaps 8 in the corners of the octagonal for the particle matter to fall in to. Other geometries for the funnels are plausible for the separator as long as a gap can be provided.

In the illustrated embodiment the filtering/carrier material is zeolite. An advantage with zeolite is that it has a comparatively large efficient surface area, so that it can contain a lot of bacteria and organisms. It also is an ion-exchanger whereby it will bind metals to itself. The metals can thereafter be removed from the zeolite in the regeneration process if, e.g., a saline solution is used to back-wash the system. The enhanced removal of metals, heavy metals in particular, is an attractive feature since this makes it possible to, to a higher extent, use the sludge as a fertilizer in an agricultural context. Obviously, other filtering/carrier material could be used without leaving the scope of the invention as defined in the claims, e.g. rock material or plastic bodies.

Here, the sludge separator 1 has been described as an integral part of the filtering device. However, the sludge separator 1 may also be used in other filtering devices or as a stand-alone device, e.g. for pretreatment before a conventional activated sludge treatment. Similarly, the filtering portion 2 with the air nozzles 19 placed approximately halfway between the inlet 4 and the outlet 24 may be used without the sludge separator. In such cases, the filtering device may be preceded by a conventional settling tank, although this is less attractive because of the larger footprint of such settling tanks as compared to the sludge separator 1.

Also, the funnels 6, 7 used in the sludge separator 1 could be in the form of cylinders or other suitable shape. Further, a flow could be established in the gap between the outer 7 and the inner funnel 6, preferably counter flowing the flow in the inner funnel 6 in order to clean the openings in the upper portion of the inner funnel 6.

## Claims

1. A fluid treatment device comprising a sludge separator (1), **characterised in that** said separator (1) comprises an inner funnel (6) and an outer (7) funnel, arranged with an intermediate, at least partial, gap (8) between the funnels (6, 7).

2. A fluid treatment device as claimed in claim 1, further comprising a filtering device having a filter portion (2) containing a filtering material (18), a fluid inlet (4) and a fluid outlet (24), wherein the inlet (4) is in the upper part of the device and the outlet (24) is in the lower part of the device.

3. A fluid treatment device according to claim 1 or 2, wherein a fluid flow in the inner funnel (6) is facilitated by a circulation pump (10) collecting fluid from the separator (1) and ejecting said fluid essentially tangential to the circumference of the inner funnel (6), thus creating an essentially circular swirling flow in the inner funnel (6).

4. A fluid treatment device according to any one of claims 1-3, wherein a cylinder (9) provided with flanges extending outwardly from the circumference of the cylinder (9) is concentrically arranged in the inner funnel (6).

5. A fluid treatment device according to any one of claims 1-4, wherein the device is sealed so that it is able to operate under superatmospheric pressure.

6. A fluid treatment device according to any one of claims 1-5, further comprising a drain (13, 14) for drainage of particle material and/or sludge.

7. A fluid treatment device according to any one of claims 1-6, wherein aeration nozzles (19) are arranged in the filtering device between the inlet (4) and the outlet (24) at a distance from the inlet (4) and the outlet (24), respectively, enabling the creation of a vertical division of the filter portion (2) into an aerobe section (2a) and an anaerobe section (2b).

8. A fluid treatment system, comprising two or more fluid treatment devices according to any one of claims 1-7 coupled in parallel or in series.

9. A fluid filtering device comprising a filter portion (2) containing a filtering material (18), a fluid inlet (4) and a fluid outlet (24), wherein the inlet (4) is in the upper part of the device and the outlet (24) is in the lower part of the device, **characterised in that** aeration nozzles (19) are arranged in the device between the inlet (4) and the outlet (24) at a distance from the inlet (4) and the outlet (24), respectively, enabling the creation of a vertical division of the filter portion (2) into an aerobe section (2a) and an anaerobe section (2b).

10. A fluid filtering device according to claim 9, further comprising a sludge separator (1).

11. A fluid filtering device according to claim 10, wherein the separator (1) comprises an inner funnel (6) and an outer funnel (7), arranged with an intermediate, at least partial, gap (8) between the funnels.

12. A fluid filtering device according to claim 11, wherein an essentially circular horizontal swirling fluid flow is facilitated in the inner funnel (6) by a circulation pump (10) collecting fluid from the separator (1) and ejecting said fluid essentially tangential to the circumference of the inner funnel (6).

13. A fluid filtering device according to claim 11 or 12, wherein a cylinder (9) provided with flanges extending outwardly from the circumference of the cylinder (9) is concentrically arranged in the inner funnel (6).

14. A fluid filtering device according to any one of claims 9-13, wherein the device is sealed so that it is able to operate under superatmospheric pressure.

15. A fluid filtering device according to any one of claims 9-14, further comprising a drain (13, 14) for drainage of particle material and/or sludge.

16. A fluid filtering system, comprising two or more fluid filtering devices according to any one of claims 9-15 coupled in parallel or in series.

17. A method for filtering fluids in a filtering device, comprising the steps of:
- providing fluid to be filtered to a sludge separator (1) of the filtering device,
- allowing larger particles to settle in the sludge separator (1) and draining said larger particles out of the filtering device,
- creating an essentially circular swirling flow in the sludge separator (1), thus forcing smaller particles outwardly in a radial direction,
- collecting said smaller particles and draining them out of the filtering device,
- passing the fluid through a filter portion (2) of the filtering device, and
- draining the filtered fluid out of the filtering device.

18. A method as claimed in claim 17, wherein the fluid is aerated in an upper portion (2a) of the filter portion (2) and subjected to anaerobe conditions in a lower portion (2b) of the filter portion (2).

19. A method for filtering fluids in a filtering device, comprising the steps of:
- passing the fluid through a filter portion (2) of the filtering device,
- aerating the fluid in an upper portion (2a) of the filter portion (2),
- subjecting the fluid to anaerobe conditions in a lower portion (2b) of the filter portion (2), and
- draining the filtered fluid out of the filtering device.

20. A method as claimed in claim 19, further comprising, prior to passing the fluid through the filter portion (2), the steps of:
- providing fluid to be filtered to a sludge separator (1) of the filtering device,
- allowing larger particles to settle in the sludge separator (1) and draining said larger particles out of the filtering device,
- creating an essentially circular swirling flow in the sludge separator (1), thus forcing smaller particles outwardly in a radial direction,
- collecting said smaller particles and draining them out of the filtering device

21. A method for regenerating a fluid treatment device according to any one of claims 1-7 or a fluid filtering device according to any one of claims 10-15, comprising the steps of:
- stopping the supply of fluid to be filtered to the device and draining filtered fluid from the device,
- opening a drainage valve (15) in a drainage pipe (13) in the device providing a drainage of sludge,
- pumping regenerating fluid from a supply line (23) in the bottom of the device, thus creating a flow upwards through the device, said fluid entering the sludge separator (1) and consecutively said drainage pipe (13),
- releasing air from air nozzles (22) provided in the lower part of the device, thus forcing sludge particles upwards in the device, said particles following the water flow out of the device.

22. Method according to claim 21 wherein the regenerating fluid comprises water.

23. Method according to claim 21 or 22, wherein the regenerating fluid comprises a saline solution.
